# EUROPEAN PATENT APPLICATION

(11) **EP 4 446 161 A1**
(43) Date of publication of application: **16.10.2024**
(21) Application number: 23746160.3
(22) Date of filing: 18.01.2023
(51) Int. Cl.: B60L 53/24, H02J 7/00

(54) **CONTROL METHOD AND APPARATUS FOR POWER SUPPLY CIRCUIT, AND ELECTRONIC VEHICLE**

(30) Priority: 30.01.2022 CN 202210114754
(71) Applicant: Huawei Digital Power Technologies Co., Ltd., Shenzhen, Guangdong 518043 (CN)
(72) Inventor: FENG, Ningbo, Shenzhen, Guangdong 518043 (CN); LI, Ying, Shenzhen, Guangdong 518043 (CN); REN, Maojie, Shenzhen, Guangdong 518043 (CN)
(74) Representative: Epping - Hermann - Fischer
(86) International application number: PCT/CN2023/072766
(87) International publication number: WO 2023/143278

(57) **Abstract**

This application provides a control method and apparatus for a power supply circuit, and an electric vehicle. The power supply circuit includes a first switch, three bridge arms, and a motor. Each bridge arm includes a first switching transistor and a second switching transistor. A direct current power supply is coupled to a switching transistor of each bridge arm and a power battery by using the first switch. The control method is: when detecting that the direct current power supply stops supplying power, controlling the first switch to be turned off; after the first switch is turned off, controlling a second switching transistor of a first bridge arm, a first switching transistor of a second bridge arm among the bridge arms, and a first switching transistor of a third bridge arm among the bridge arms to be turned on, so that the power battery forms a first closed loop through the first switching transistor of the second bridge arm, the first switching transistor of the third bridge arm, and the second switching transistor of the first bridge arm; and providing, by the power battery, a first current to the motor, where the first current controls a torque of the motor. This application is implemented to reduce a crackling sound and improve NVH characteristics of the electric vehicle.

## Description

This application claims priority to Chinese Patent Application No. 202210114754.4, filed with the China National Intellectual Property Administration on January 30, 2022 and entitled "CONTROL METHOD AND APPARATUS FOR POWER SUPPLY CIRCUIT, AND ELECTRIC VEHICLE", which is incorporated herein by reference in its entirety.

### TECHNICAL FIELD

This application relates to the technical field of new energy vehicles, and in particular, to a control method and apparatus for a power supply circuit, and an electric vehicle.

### BACKGROUND

Output voltages of some charging piles that are put into an existing market are 220 V to 500 V However, to resolve a problem that a charging speed of an electric vehicle is low, a voltage of a power battery currently provided in the electric vehicle is relatively high, for example, 600 V to 800 V Therefore, when the voltage of the power battery in the electric vehicle is 600 V, a charging pile that can output only 220 V to 500 V cannot charge the electric vehicle. Therefore, to adapt to some charging piles in the existing market, a power supply circuit may be disposed in the electric vehicle, and the power supply circuit may reuse a motor winding in a motor to boost a voltage output by the charging pile and then provide the voltage to the power battery.

However, reusing the motor winding in the motor brings about the following problems: When the charging pile actively stops supplying power, for example, when the charging pile is powered off in an emergency due to a fault, or a user taps on a human-machine operation interface of the charging pile to terminate the power supply, or a user operates the charging pile by using a user app to terminate the power supply, a current of the motor winding quickly decreases, and a torque of the motor quickly decreases. As a result, crackling and rebound occur on a series of mechanical structures such as a wheel, a drive shaft, and a reducer gear in the electric vehicle. Consequently, noise, vibration, and harshness (Noise, Vibration, Harshness, NVH) characteristics of the electric vehicle are poor.

### SUMMARY

This application provides a control method and apparatus for a power supply circuit, and an electric vehicle, to control a current of a motor to slowly decrease when a direct current power supply stops supplying power, so as to control a torque of the motor to slowly decrease, reduce a crackling sound of a mechanical structure, and improve NVH characteristics of the electric vehicle. According to a first aspect, an embodiment of this application provides a control method for a power supply circuit, where the power supply circuit is disposed between a direct current power supply and a power battery, the power supply circuit includes a first switch, three bridge arms, and a motor, each of the three bridge arms includes a first switching transistor and a second switching transistor, and the motor includes three motor windings corresponding to the three bridge arms. In a specific implementation, a first end of the direct current power supply is coupled to the first switching transistor of each bridge arm and a first end of the power battery, a second end of the power battery is coupled to the second switching transistor of each bridge arm, a midpoint of any bridge arm among the bridge arms is coupled to a motor winding corresponding to the any bridge arm, and the midpoint of the any bridge arm is a series coupling point between a first switching transistor and a second switching transistor in the any bridge arm; and a midpoint of a first bridge arm among the bridge arms is further coupled to one end of the first switch, and the other end of the first switch is coupled to a second end of the direct current power supply.

The control method provided in this embodiment of this application is: when detecting that the direct current power supply stops supplying power, controlling the first switch to be turned off; and after the first switch is turned off, controlling a second switching transistor of the first bridge arm, a first switching transistor of a second bridge arm among the bridge arms, and a first switching transistor of a third bridge arm among the bridge arms to be turned on, so that the power battery forms a first closed loop through the first switching transistor of the second bridge arm, the first switching transistor of the third bridge arm, and the second switching transistor of the first bridge arm; and providing, by the power battery, a first current to the motor, where the first current may control a torque of the motor. In this embodiment of this application, when the direct current power supply stops supplying power, the first switch is controlled to be turned off, and control on the switching transistors of the bridge arms is added for switching from the direct current power supply to the power battery to provide a current of the motor, so that the current of the motor is controllable when the direct current power supply stops supplying power. The current of the motor is controlled to decrease slowly, that is, the torque of the motor may be controlled to decrease slowly when the direct current power supply stops supplying power, so as to reduce a crackling sound of a mechanical structure and improve NVH characteristics of an electric vehicle.

With reference to the first aspect, in a first possible implementation, when the first switch is turned off, and the first switching transistor of the second bridge arm and the first switching transistor of the third bridge arm are in an on state, and the second switching transistor of the first bridge arm is in an off state, where occurrence of the states may be understood as presence of a delay between controlling the first switch to be turned off and controlling the second switching transistor of the first bridge arm to be turned on due to a device attribute of a controller after the controller detects that the direct current power supply stops supplying power and then controls the first switch to be turned off, each motor winding is short-circuited to freewheel within the delay time, so that each motor winding forms a second closed loop through a first switching transistor of the first bridge arm, the first switching transistor of the second bridge arm, and the first switching transistor of the third bridge arm, where a current passing through the motor is a second current, and the second current may control the torque of the motor.

With reference to the first aspect or the first possible implementation of the first aspect, in a second possible implementation, the power supply circuit further includes a first capacitor, and the first capacitor and the direct current power supply are connected in parallel. Before the controlling the first switch to be turned off, the control method further includes: controlling, based on a first duty cycle, the first switching transistor of the second bridge arm among the bridge arms and the first switching transistor of the third bridge arm among the bridge arms to be turned on; and when detecting that the direct current power supply stops supplying power, controlling, based on a second duty cycle, the first switching transistor of the second bridge arm and the first switching transistor of the third bridge arm to be turned on, where the second duty cycle is greater than the first duty cycle; and providing, by the first capacitor, a third current to the motor, where the third current may control the torque of the motor. In this embodiment of this application, the duty cycle of the switching transistor is increased to reduce a decreasing speed of the current of the motor. With reference to the second possible implementation of the first aspect, in a third possible implementation, the controlling, based on a second duty cycle, the first switching transistor of the second bridge arm and the first switching transistor of the third bridge arm to be turned on when detecting that the direct current power supply stops supplying power is specifically implemented as: when detecting that the direct current power supply stops supplying power, and a current of the motor decreases to a rebound torque current, controlling, based on a third duty cycle, the first switching transistor of the second bridge arm and the first switching transistor of the third bridge arm to be turned on, where the rebound torque current is a current required by a torque for preventing the motor from crackling, the third duty cycle is greater than the first duty cycle or the second duty cycle, and the current of the motor is at least one of a current of the second bridge arm and a current of the third bridge arm. This embodiment of this application can be implemented to reduce an energy loss of the first capacitor.

With reference to the first aspect or the first possible implementation of the first aspect, in a fourth possible implementation, the power supply circuit further includes a first capacitor, and the first capacitor and the direct current power supply are connected in parallel. Before the controlling the first switch to be turned off, the control method further includes: when a current of the motor decreases to a first preset current threshold, controlling the first switching transistor of the second bridge arm among the bridge arms and the first switching transistor of the third bridge arm among the bridge arms to be turned on; and when the current of the motor increases to a second preset current threshold, controlling the first switching transistor of the second bridge arm among the bridge arms and the first switching transistor of the third bridge arm among the bridge arms to be turned off, where the second preset current threshold is greater than the first preset current threshold, and the current of the motor is at least one of a current of the second bridge arm and a current of the third bridge arm.

With reference to the fourth possible implementation of the first aspect, in a fifth possible implementation, the first preset current threshold is any value in a first current threshold curve, and the second preset threshold is any value in a second current threshold curve.

With reference to any one of the first aspect or the foregoing possible implementations of the first aspect, in a sixth possible implementation, if an electrical parameter output by the direct current power supply decreases to a first reference electrical parameter threshold within preset duration, it is considered that the direct current power supply stops supplying power, where the electrical parameter includes at least one of a current and a voltage.

With reference to the first aspect or the first possible implementation to the fifth possible implementation of the first aspect, in a seventh possible implementation, if a difference between an electrical parameter output by the direct current power supply and a reference electrical parameter is greater than a second reference electrical parameter threshold, it is considered that the direct current power supply stops supplying power, where the electrical parameter includes at least one of a current and a voltage.

With reference to any one of the first aspect or the foregoing possible implementations of the first aspect, in an eighth possible implementation, the power supply circuit further includes a second switch. That a first end of the direct current power supply is coupled to the first switching transistor of each bridge arm and a first end of the power battery is specifically implemented as follows: the first end of the direct current power supply is coupled to one end of the second switch, and the other end of the second switch is coupled to the first switching transistor of each bridge arm and the first end of the power battery; and
the controlling the first switch to be turned off is specifically implemented as: controlling at least one of the first switch and the second switch to be turned off.

According to a second aspect, an embodiment of this application provides a control apparatus for a power supply circuit, where the control apparatus includes a controller and a memory, and the controller and the memory are connected by using a bus system. In a specific implementation, the memory stores instructions; and the controller invokes the instructions stored in the memory, to perform any one of the first aspect or the foregoing possible implementations of the first aspect. For example, the controller may be specifically implemented as a battery management system (Battery Management System, BMS), a micro control unit (Micro Control Unit, MCU), a central processing unit (central processing unit, CPU), another general purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. It may be understood that the controller may be one chip or a plurality of chips having communication connections.

According to a third aspect, an embodiment of this application provides an electric vehicle, where the electric vehicle includes the control apparatus described in the second aspect and a power battery, and the control apparatus may control charging or discharging of the power battery.

It should be understood that mutual reference may be made for implementations and beneficial effects of the foregoing aspects of this application.

### BRIEF DESCRIPTION OF DRAWINGS

FIG. 1 is a circuit diagram of a power supply circuit according to an embodiment of this application;
FIG. 2A and FIG. 2B are schematic circuit diagrams for charging a power battery by a power supply circuit according to an embodiment of this application;
FIG. 3 is a schematic circuit diagram of a first closed loop according to an embodiment of this application;
FIG. 4 is a schematic circuit diagram of a second closed loop according to an embodiment of this application;
FIG. 5 is a schematic current diagram of a motor according to an embodiment of this application;
FIG. 6A to FIG. 6C are schematic diagrams of control signals of some switching transistors of three bridge arms according to an embodiment of this application;
FIG. 7 is a schematic circuit diagram of a third closed loop according to an embodiment of this application;
FIG. 8 to FIG. 13 are other schematic current diagrams of a motor according to an embodiment of this application;
FIG. 14 is another circuit diagram of a power supply circuit according to an embodiment of this application;
FIG. 15A and FIG. 15B are schematic circuit diagrams for charging a power battery by a power supply circuit according to an embodiment of this application;
FIG. 16 is another schematic circuit diagram of a first closed loop according to an embodiment of this application;
FIG. 17 is another schematic circuit diagram of a second closed loop according to an embodiment of this application; and
FIG. 18 is a schematic circuit diagram of a third closed loop according to an embodiment of this application.

### DETAILED DESCRIPTION OF EMBODIMENTS

The following clearly and describes the technical solutions in embodiments of this application with reference to the accompanying drawings in embodiments of this application. Apparently, the described embodiments are only some rather than all of embodiments of this application. All other embodiments obtained by a person of ordinary skill in the art based on embodiments of this application without creative efforts shall fall within the protection scope of this application.

The technical solutions of this application are further described below in detail with reference to the accompanying drawings.

Embodiments of this application may be applied to an electric vehicle. A power supply circuit included in embodiments of this application may be disposed in an motor control unit in the electric vehicle. Optionally, a contactor in the power supply circuit included in embodiments of this application may be independently placed in a power distribution box, and the power distribution box may be communicatively connected to the motor control unit.

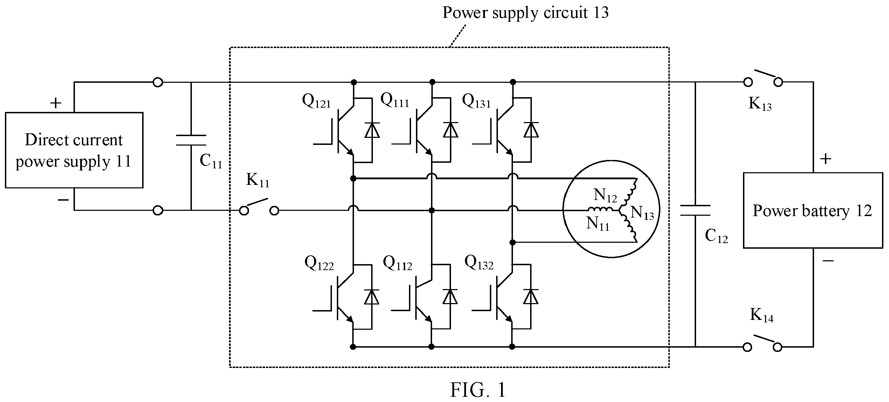

The following first describes, by using an example, a specific structure of the power supply circuit provided in embodiments of this application. FIG. 1 is a circuit diagram of a power supply circuit according to an embodiment of this application. As shown in FIG. 1, the power supply circuit 13 is disposed between a direct current power supply 11 and a power battery 12, and the power supply circuit 13 includes a first switch *K*₁₁, three bridge arms, and a motor. The motor includes three motor windings (for example, a first motor winding *N*₁₁, a second motor winding *N*₁₂, and a third motor winding *N*₁₃) corresponding to the three bridge arms.

In a specific implementation, a first end of the direct current power supply 11 is coupled to a first switching transistor of each bridge arm and a first end of the power battery 12. It can be learned from FIG. 1 that, in this embodiment of this application, the first end of the direct current power supply 11 is a positive end, and the first end of the power battery 12 is a positive end.

It should be noted that "coupling" described in this application indicates a direct connection or an indirect connection. For example, a coupling between A and B may be a direct connection between A and B, or may be an indirect connection between A and B by using one or more other electronic components. For example, A may be directly connected to C, and C is directly connected to B, so that A is connected to B by using C.

Optionally, a switch *K*₁₃ may be disposed between the direct current power supply 11 and the positive end of the power battery 12.

A second end of the power battery 12 is coupled to a second switching transistor of each bridge arm, where the second end of the power battery 12 is a negative end. For example, each bridge arm includes a first switching transistor and a second switching transistor. For example, a first bridge arm includes a first switching transistor *Q*₁₁₁ and a second switching transistor *Q*₁₁₂, a second bridge arm includes a first switching transistor *Q*₁₂₁ and a second switching transistor *Q*₁₂₂, and a third bridge arm includes a first switching transistor *Q*₁₃₁ and a second switching transistor *Q*₁₃₂. In this case, the negative end of the power battery 12 is coupled to the second switching transistor *Q*₁₁₂ of the first bridge arm, the second switching transistor *Q*₁₂₂ of the second bridge arm, and the second switching transistor *Q*₁₃₂ of the third bridge arm. Optionally, a switch *K*₁₄ may be disposed between the negative end of the power battery 12 and the second switching transistor *Q*₁₃₂ of the third bridge arm.

A series coupling point between a first switching transistor and a second switching transistor in any bridge arm is a midpoint of the any bridge arm. To be specific, a series coupling point between the first switching transistor *Q*₁₁₁ and the second switching transistor *Q*₁₁₂ is a midpoint of the first bridge arm, a series coupling point between the first switching transistor *Q*₁₂₁ and the second switching transistor *Q*₁₂₂ is a midpoint of the second bridge arm, and a series coupling point between the first switching transistor *Q*₁₃₁ and the second switching transistor *Q*₁₃₂ is a midpoint of the third bridge arm.

It can be learned from FIG. 1 that a midpoint of each bridge arm is coupled to a motor winding corresponding to the bridge arm. For example, the midpoint of the first bridge arm is coupled to the first motor winding *N*₁₁, the midpoint of the second bridge arm is coupled to the second motor winding *N*₁₂, and the midpoint of the third bridge arm is coupled to the third motor winding *N*₁₃. In addition, the midpoint of the first bridge arm is further coupled to one end of the first switch *K*₁₁, and the other end of the first switch *K*₁₁ is coupled to a second end of the direct current power supply 11, where the second end of the direct current power supply 11 is a negative end. In some feasible implementations, the positive end of the direct current power supply 11 may be further coupled to the positive end of the power battery 12 by using a second switch (not shown in the figure). For example, the positive end of the direct current power supply 11 is further coupled to one end of the second switch, and the other end of the second switch is coupled to the positive end of the power battery 12. In other words, a quantity of switches disposed in the power supply circuit is not limited in this embodiment of this application, and a specific switch may be disposed based on an actual requirement of the power supply circuit.

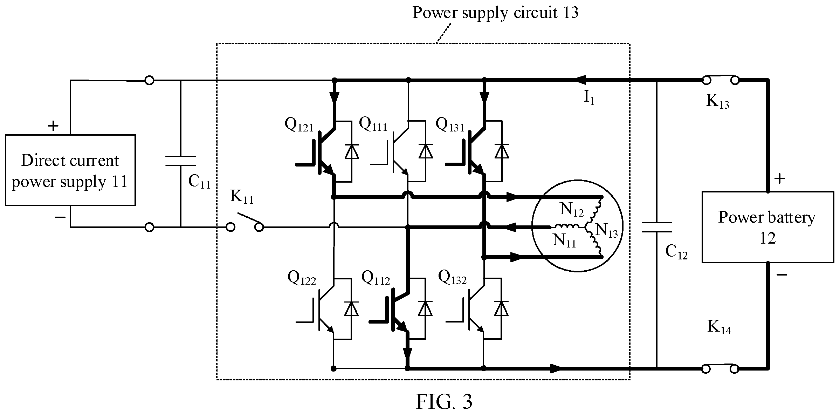

The first switch *K*₁₁ and the second switch (not shown in the figure) may be specifically implemented as contactors, relays, or the like, and may be disposed separately from the power supply circuit 13. For example, the first switch *K*₁₁ and the second switch are disposed in a power distribution box of an electric vehicle, and the second switch is disposed near a battery pack. A position for placing the switch is not limited in this embodiment of this application, provided that an electrical connection relationship shown in FIG. 3 can be implemented.

Optionally, the power supply circuit 13 may further include a first capacitor *C*₁₁, and the first capacitor *C*₁₁ is connected in parallel to two ends of the direct current power supply 11. For example, alternatively, the first capacitor *C*₁₁ may be specifically provided by an output end of the direct current power supply 11. For example, the direct current power supply 11 is specifically implemented as a charging pile, and an output end of the charging pile has a capacitor. In this case, the first capacitor *C*₁₁ shown in FIG. 3 includes the capacitor at the output end of the charging pile and a capacitor at an input end of the power supply circuit 13.

Optionally, the power supply circuit 13 may further include a second capacitor *C*₁₂, and the second capacitor *C*₁₂ is connected in parallel to two ends of the power battery 12.

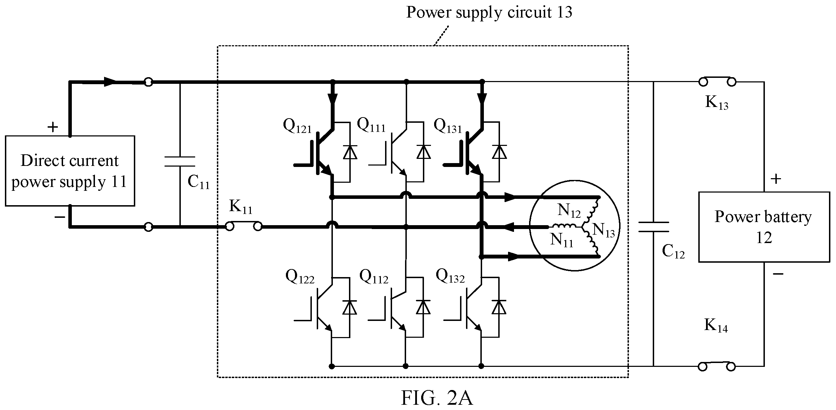

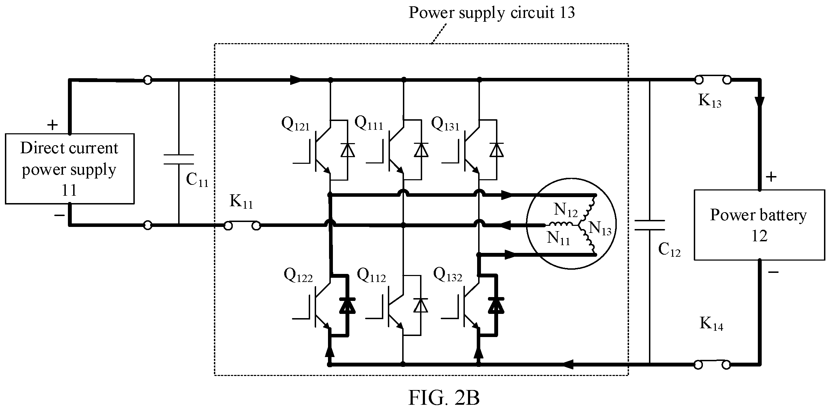

With reference to FIG. 2A and FIG. 2B, the following describes how the power supply circuit 13 reuses the motor winding in the motor to boost a voltage output by the direct current power supply 11 and provide the voltage to the power battery 12.

In a specific implementation, as shown in FIG. 2A, the first switch *K*₁₁ is closed, and the first switching transistor *Q*₁₂₁ of the second bridge arm and the first switching transistor *Q*₁₃₁ of the third bridge arm are turned on, so that a current output by the positive end of the direct current power supply 11 can pass through the first switching transistor *Q*₁₂₁, the second motor winding *N*₁₂, the first motor winding *N*₁₁, and the first switch *K*₁₁ sequentially and return to the negative end of the direct current power supply 11, or can pass through the first switching transistor *Q*₁₃₁, the third motor winding *N*₁₃, the first motor winding *N*₁₁, and the first switch *K*₁₁ sequentially and return to the negative end of the direct current power supply 11. In this case, each motor winding is equivalent to an inductor and is in a charging state.

When the first switching transistor *Q*₁₂₁ of the second bridge arm and the first switching transistor *Q*₁₃₁ of the third bridge arm are turned off, each motor winding is in a discharging state. As shown in FIG. 2B, after an output current of the first motor winding *N*₁₁ passes through the first switch *K*₁₁, the direct current power supply 11, the switch *K*₁₃, and the power battery 12, the output current may pass through a freewheeling diode of the second switching transistor *Q*₁₂₂ in the second bridge arm and the second motor winding *N*₁₂ to form a closed loop, or may pass through a freewheeling diode of the second switching transistor *Q*₁₃₂ in the third bridge arm and the third motor winding *N*₁₃ to form a closed loop. In this case, each motor winding is in the discharging state, a voltage between the two ends of the power battery 12 is a sum of a voltage of the direct current power supply 11 and a voltage of the motor, and the voltage of the power battery 12 is greater than the voltage of the direct current power supply 11. In this way, voltage boosting is implemented.

In a charging or discharging process of the motor winding, a current of the motor passes through each motor winding, and a torque is generated on the motor. The torque of the motor continuously acts on a reducer gear, a differential spline, and a drive shaft spline of the electric vehicle. When the direct current power supply 11 actively stops supplying power, for example, when the direct current power supply 11 is powered off in an emergency due to a fault, or a user taps on a human-machine operation interface of the charging pile (that is, the direct current power supply 11) to terminate the power supply, or a user operates the direct current power supply 11 by using a user app to terminate the power supply, the current of the motor rapidly decreases to a relatively small value or even 0 at a millisecond ms level speed. Because the current of the motor is positively correlated with the torque of the motor, the current of the motor decreases rapidly, and the torque of the motor also decreases rapidly. As a result, crackling and rebound occur on a series of mechanical structures such as a wheel, a drive shaft, and a reducer gear in the electric vehicle, and a crackling sound of a mechanical structure is generated. Consequently, NVH characteristics of the electric vehicle are poor.

To reduce the crackling sound of the mechanical structure and improve the NVH characteristics of the electric vehicle, an embodiment of this application provides a control method for the foregoing power supply circuit. When the direct current power supply stops supplying power, the first switch is turned off, and the switching transistors of the bridge arms are controlled to enable the power battery to provide a first current to the motor. The first current may control the torque of the motor, and the first current is provided by the power battery and is in a controllable state. Therefore, the torque of the motor is also controllable, and can slowly decrease when the direct current power supply stops supplying power, to reduce the crackling sound of the mechanical structure, and improve the NVH characteristics of the electric vehicle.

In some feasible implementations, when detecting that the direct current power supply stops supplying power, a controller controls the first switch *K*₁₁ to be turned off. The controller may be specifically implemented as a battery management system (Battery Management System, BMS), a micro control unit (Micro Control Unit, MCU), a central processing unit (central processing unit, CPU), another general purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like.

For example, the controller may determine, by monitoring an electrical parameter output by the direct current power supply 11, whether the direct current power supply 11 stops supplying power. The electrical parameter includes at least one of a current and a voltage. For example, if the controller detects that the voltage output by the direct current power supply 11 decreases to a first reference voltage threshold within preset duration, the controller considers that the voltage output by the direct current power supply 11 drops rapidly, and stops supplying power. For another example, if the controller detects that the current output by the direct current power supply 11 decreases to a first reference current threshold within preset duration, the controller considers that the current output by the direct current power supply 11 drops rapidly, and stops supplying power. Alternatively, the controller may calculate a difference between an electrical parameter output by the direct current power supply 11 and a reference electrical parameter, compare the difference between the two parameters with a second reference electrical parameter threshold, and determine, based on a comparison result, whether the direct current power supply 11 stops supplying power. For example, a reference output voltage of the direct current power supply 11 is 500 V, and the controller detects that the voltage output by the direct current power supply is actually 300 V, where a difference between the two voltages is 200 V In this case, if a second reference voltage threshold is 100 V, the controller considers that the direct current power supply 11 has stopped supplying power.

After the first switch *K*₁₁ is turned off, the controller in this embodiment of this application further continues to control the second switching transistor *Q*₁₁₂ of the first bridge arm, the first switching transistor *Q*₁₂₁ of the second bridge arm, and the first switching transistor *Q*₁₃₁ of the third bridge arm to be turned on. Because the first switch *K*₁₁ is turned off, the power battery 12 is short-circuited to the first capacitor *C*₁₁ or another component in the direct current power supply 11.

In this case, the power supply circuit 13 forms a first closed loop. For a schematic circuit diagram of the first closed loop, refer to FIG. 3. As shown in FIG. 3, after an output current of the power battery 12 passes through the switch *K*₁₃, the output current may pass through the first switching transistor *Q*₁₂₁ of the second bridge arm, the second motor winding *N*₁₂, the first motor winding *N*₁₁, and the second switching transistor *Q*₁₁₂ of the first bridge arm to form a closed loop, or may pass through the first switching transistor *Q*₁₃₁ of the third bridge arm, the third motor winding *N*₁₃, the first motor winding *N*₁₁, and the second switching transistor *Q*₁₁₂ of the first bridge arm to form a closed loop. In this case, the power battery 12 provides the first current *I*₁ to the motor, and a value of the first current *I*₁ may be controlled by the controller.

For example, the controller may specifically control on duration of the second switching transistor *Q*₁₁₂ of the first bridge arm, the first switching transistor *Q*₁₂₁ of the second bridge arm, and the first switching transistor *Q*₁₃₁ of the third bridge arm to control the current of the motor to slowly decrease, or may control the current of the motor to first increase and then slowly decrease, or may adjust a current proportion of a three-phase motor winding or change a torque direction of the motor. In this embodiment of this application, how to specifically control the current of the motor is not limited. Specifically, how to control the current of the motor may be determined based on an actual application requirement.

In summary, in this embodiment of this application, when the direct current power supply stops supplying power, the first switch is controlled to be turned off, and control on the switching transistors of the bridge arms is added for switching from the direct current power supply to the power battery to provide the current of the motor, so that the current of the motor is controllable when the direct current power supply stops supplying power. The current of the motor is controlled to decrease slowly, that is, the torque of the motor may be controlled to decrease slowly when the direct current power supply stops supplying power, so as to reduce the crackling sound of the mechanical structure and improve the NVH characteristics of the electric vehicle.

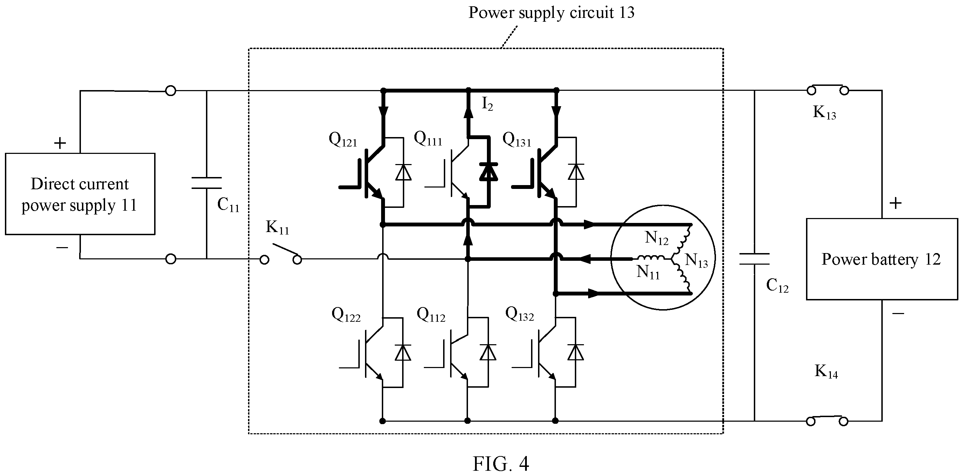

Optionally, in some feasible implementations, when the first switch *K*₁₁ is turned off, the first switching transistor *Q*₁₂₁ of the second bridge arm and the first switching transistor *Q*₁₃₁ of the third bridge arm are in an on state, and the second switching transistor *Q*₁₁₂ of the first bridge arm is in an off state. Occurrence of the states may be understood as presence of a delay between controlling the first switch *K*₁₁ to be turned off and controlling the second switching transistor *Q*₁₁₂ of the first bridge arm to be turned on due to a device attribute of the controller after the controller detects that the direct current power supply 11 stops supplying power and then controls the first switch *K*₁₁ to be turned off. Each motor winding is short-circuited to freewheel within the delay time, so that a second closed loop is formed. For a schematic circuit diagram of the second closed loop, refer to FIG. 4. As shown in FIG. 4, because an inductance current cannot change abruptly, after an output current of the first motor winding *N*₁₁ passes through the first switching transistor *Q*₁₁₁ (especially a parasitic diode of the first switching transistor *Q*₁₁₁) of the first bridge arm, the output current may pass through the first switching transistor *Q*₁₂₁ of the second bridge arm and the second motor winding *N*₁₂ to form a closed loop, or may pass through the first switching transistor *Q*₁₃₁ of the third bridge arm and the third motor winding *N*₁₃ to form a closed loop. The current passing through the motor is a second current *I*₂.

It should be noted that each switching transistor of each bridge arm may be a metal-oxide semiconductor field-effect transistor (Metal-Oxide-Semiconductor Field-Effect Transistor, MOSFET), an insulated gate bipolar transistor (Insulated Gate Bipolar Transistor, IGBT), a parallel diode thereof, or the like.

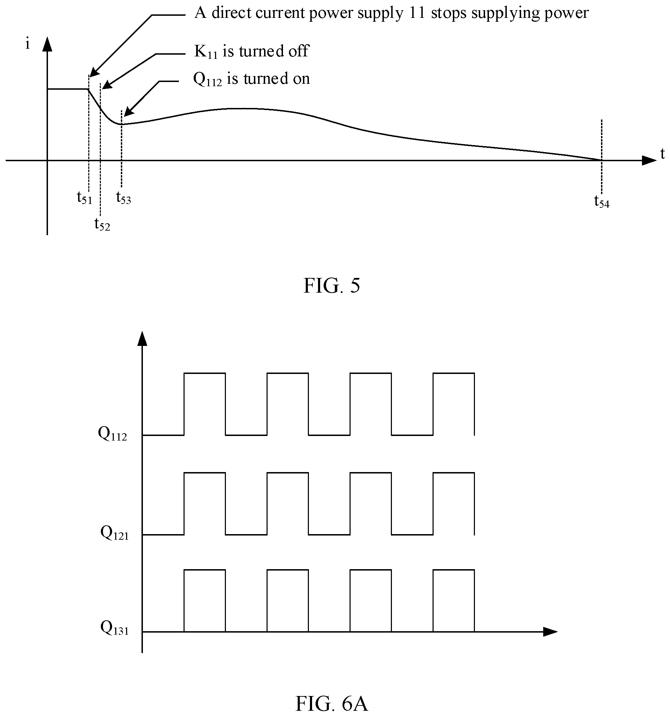

With reference to FIG. 3 and FIG. 4, the power supply circuit 13 may first form the second closed loop (that is, the schematic circuit diagram shown in FIG. 4), and then form the first closed loop (that is, the schematic circuit diagram shown in FIG. 3). In a process of forming the second closed loop to the first closed loop by the power supply circuit 13, a current of the motor is shown in FIG. 5. Before a time *t*₅₁, the direct current power supply 11 may provide a constant current or a variable current to the motor. FIG. 5 is merely an example for describing the current of the motor before the time *t*₅₁, but this is not limited.

At the time *t*₅₁, the direct current power supply 11 stops supplying power, and the current i of the motor decreases. Because the controller has a delay in detection, the controller may detect, after the time *t*₅₁ and before a time *t*₅₂, that the direct current power supply 11 stops supplying power, and control the first switch *K*₁₁ to be turned off at the time *t*₅₂, and the second switching transistor *Q*₁₁₂ of the first bridge arm to be turned on at a time *t*₅₃.

In a time period from *t*₅₁ to *t*₅₃, the power supply circuit 13 forms the second closed loop shown in FIG. 4, each motor winding performs freewheeling on the motor, and the current i of the motor decreases.

After the time *t*₅₃, the power supply circuit 13 forms the first closed loop shown in FIG. 3, and the power battery 12 provides a current to the motor. In this case, the current of the motor is in a controlled state. The controller may control on duration of the second switching transistor *Q*₁₁₂ of the first bridge arm, the first switching transistor *Q*₁₂₁ of the second bridge arm, and the first switching transistor *Q*₁₃₁ of the third bridge arm, so that the current of the motor may first increase and then slowly decrease until the current decreases to 0 at a time *t*₅₄, as shown in FIG. 5. Therefore, the torque of the motor first increases between *t*₅₃ and *t*₅₄ and then slowly decreases. Because the torque of the motor does not quickly decrease to 0 at a millisecond ms level, the crackling sound of the mechanical structure is reduced, and the NVH characteristics of the electric vehicle are good.

It should be noted that an interval between *t*₅₃ and *t*₅₄ is relatively long and may reach a second s level.

It may be understood that, in an ideal case, the time *t*₅₂ and the time *t*₅₃ may be a same time (not shown in the figure), that is, when the first switch *K*₁₁ is turned off, the second switching transistor *Q*₁₁₂ of the first bridge arm may be turned on. In this case, the power supply circuit 13 may form only the first closed loop, and the current of the motor may still slowly decrease.

The foregoing describes the first closed loop and the second closed loop formed by the second switching transistor *Q*₁₁₂ of the first bridge arm, the first switching transistor *Q*₁₂₁ of the second bridge arm, and the first switching transistor *Q*₁₃₁ of the third bridge arm that are turned on after the first switch *K*₁₁ is turned off. The following describes specific manners of controlling the second switching transistor *Q*₁₁₂ of the first bridge arm, the first switching transistor *Q*₁₂₁ of the second bridge arm, and the first switching transistor *Q*₁₃₁ of the third bridge arm by using examples with reference to FIG. 6A to FIG. 6C.

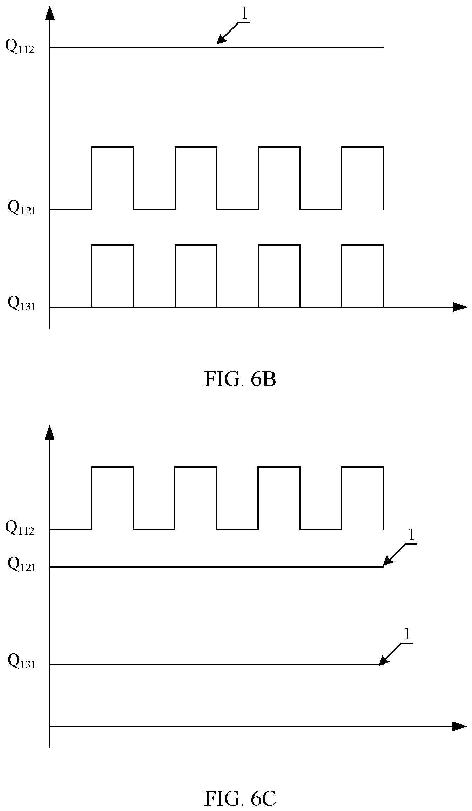

In some feasible implementations, FIG. 6A is a schematic diagram of control signals of some switching transistors of three bridge arms according to an embodiment of this application. As shown in FIG. 6A, the controller sends a same pulse width modulation (Pulse Width Modulation, PWM) signal to the second switching transistor *Q*₁₁₂ of the first bridge arm, the first switching transistor *Q*₁₂₁ of the second bridge arm, and the first switching transistor *Q*₁₃₁ of the third bridge arm. When the PWM signal is at a high level, the second switching transistor *Q*₁₁₂, the first switching transistor *Q*₁₂₁, and the first switching transistor *Q*₁₃₁ are turned on, and the power supply circuit 13 forms the first closed loop shown in FIG. 3. When the PWM signal is at a low level, the second switching transistor *Q*₁₁₂, the first switching transistor *Q*₁₂₁, and the first switching transistor *Q*₁₃₁ are turned off. It may be understood that FIG. 6A uses an example in which the PWM signal is sent to the second switching transistor *Q*₁₁₂ of the first bridge arm, the first switching transistor *Q*₁₂₁ of the second bridge arm, and the first switching transistor *Q*₁₃₁ of the third bridge arm at the same time. In an actual application, the PWM signal may be sent to the second switching transistor *Q*₁₁₂ of the first bridge arm, the first switching transistor *Q*₁₂₁ of the second bridge arm, and the first switching transistor *Q*₁₃₁ of the third bridge arm at different times, provided that high levels of the PWM signals received by the second switching transistor *Q*₁₁₂ of the first bridge arm, the first switching transistor *Q*₁₂₁ of the second bridge arm, and the first switching transistor *Q*₁₃₁ of the third bridge arm have an overlapping part. Optionally, in some feasible implementations, FIG. 6B is another schematic diagram of control signals of some switching transistors of three bridge arms according to an embodiment of this application. As shown in FIG. 6B, the controller sends a high level to the second switching transistor *Q*₁₁₂ of the first bridge arm. In this case, the second switching transistor *Q*₁₁₂ of the first bridge arm is always on. In addition, the controller sends a PWM signal to the first switching transistor *Q*₁₂₁ of the second bridge arm and the first switching transistor *Q*₁₃₁ of the third bridge arm, that is, the first switching transistor *Q*₁₂₁ of the second bridge arm and the first switching transistor *Q*₁₃₁ of the third bridge arm are switched between turn-off and turn-on. In this case, when the first switching transistor *Q*₁₂₁ of the second bridge armand the first switching transistor *Q*₁₃₁ of the third bridge arm are turned on, the power supply circuit 13 forms the first closed loop shown in FIG. 3.

Optionally, in some feasible implementations, FIG. 6C is another schematic diagram of control signals of some switching transistors of three bridge arms according to an embodiment of this application. As shown in FIG. 6C, the controller sends a high level to the first switching transistor *Q*₁₂₁ of the second bridge arm and the first switching transistor *Q*₁₃₁ of the third bridge arm. In this case, the first switching transistor *Q*₁₂₁ of the second bridge arm and the first switching transistor *Q*₁₃₁ of the third bridge arm are always on. In addition, the controller sends a PWM signal to the second switching transistor *Q*₁₁₂ of the first bridge arm, that is, the second switching transistor *Q*₁₁₂ of the first bridge arm is switched between turn-off and turn-on. In this case, when the second switching transistor *Q*₁₁₂ of the first bridge arm is turned on, the power supply circuit 13 forms the first closed loop shown in FIG. 3.

It may be understood that only a control signal of one switching transistor of each bridge arm is presented in FIG. 6A to FIG. 6C. Optionally, when the switching transistor of each bridge arm is in a freewheeling state, if the switching transistor is specifically implemented as an IGBT, the switching transistor may not be controlled, that is, no control signal is sent to the switching transistor.

If the switching transistor is specifically implemented as a MOSFET, the switching transistor may not be controlled, or control signals of two switching transistors in each bridge arm are complementary. In this case, the first switching transistor *Q*₁₁₁ of the first bridge arm, the second switching transistor *Q*₁₂₂ of the second bridge arm, and the second switching transistor *Q*₁₃₂ of the third bridge arm may be obtained based on control signals of the second switching transistor *Q*₁₁₂ of the first bridge arm, the first switching transistor *Q*₁₂₁ of the second bridge arm, and the first switching transistor *Q*₁₃₁ of the third bridge arm that are shown in FIG. 6A to FIG. 6C, and details are not described herein.

In comparison with the foregoing controller described with reference to FIG. 3 to FIG. 6C in which the controller controls the first switch *K*₁₁ to be turned off and then controls the switching transistors of the bridge arms, this embodiment of this application may further provide a control method, where the first switch *K*₁₁ may not be controlled to be turned off, the first capacitor *C*₁₁ provides a third current to the motor, and the third current may control a torque of the motor, so that the torque of the motor can slowly decrease when the direct current power supply stops supplying power, thereby reducing the crackling sound of the mechanical structure and improving the NVH characteristics of the electric vehicle.

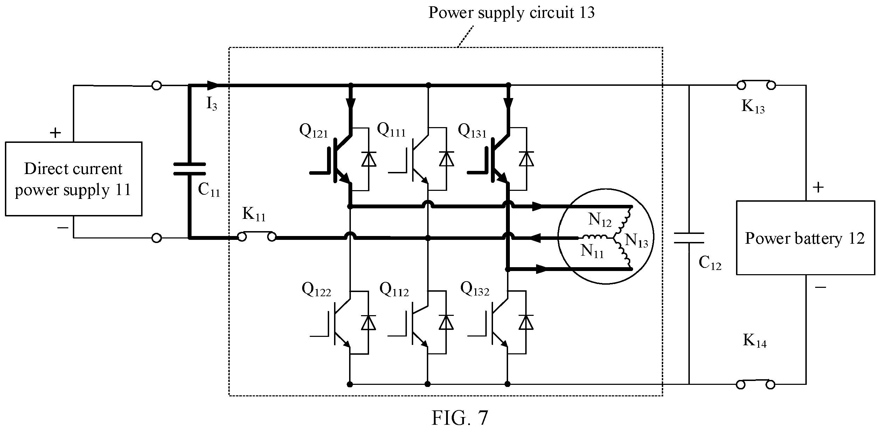

In some feasible implementations, the controller controls the first switching transistor *Q*₁₂₁ of the second bridge arm and the first switching transistor *Q*₁₃₁ of the third bridge arm to be turned on. In this case, the power supply circuit 13 forms a third closed loop. For a schematic circuit diagram of the third closed loop, refer to FIG. 7. As shown in FIG. 7, an output current of the first capacitor *C*₁₁ may pass through the first switching transistor *Q*₁₂₁ of the second bridge arm, the second motor winding *N*₁₂, the first motor winding *N*₁₁, and the first switch *K*₁₁ to form a closed loop, or may pass through the first switching transistor *Q*₁₃₁ of the third bridge arm, the third motor winding *N*₁₃, the first motor winding *N*₁₁, and the first switch *K*₁₁ to form a closed loop. It may be understood that a difference between FIG. 7 and the schematic circuit diagram shown in FIG. 2A lies in that FIG. 2A is a schematic circuit diagram of a closed loop formed when the direct current power supply 11 does not stop supplying power, while FIG. 7 is a schematic circuit diagram of a closed loop formed when the direct current power supply 11 stops supplying power. In this case, a scenario corresponding to FIG. 7 may be that a power supply module in the direct current power supply 11 (that is, the charging pile) stops outputting a voltage, but the charging pile is still inserted in the electric vehicle. To be specific, the first capacitor *C*₁₁ in this embodiment of this application may specifically include a capacitor connected in parallel to an output port of the charging pile and a capacitor connected in parallel to an input port of the power supply circuit. In some feasible implementations, by increasing a duty cycle of the switching transistor, the controller reduces a decreasing speed of the current of the motor. For example, the controller controls, based on a first duty cycle, the first switching transistor *Q*₁₂₁ of the second bridge arm and the first switching transistor *Q*₁₃₁ of the third bridge arm to be turned on; and when detecting that the direct current power supply stops supplying power, controls, based on a second duty cycle, the first switching transistor *Q*₁₂₁ of the second bridge arm and the first switching transistor *Q*₁₃₁ of the third bridge arm to be turned on, where the second duty cycle is greater than the first duty cycle. For example, the second duty cycle may also be a dynamically increased value. Optionally, the controller may further first control, based on a fourth duty cycle, the first switching transistor *Q*₁₂₁ of the second bridge arm and the first switching transistor *Q*₁₃₁ of the third bridge arm to be turned on, where the fourth duty cycle may be less than the first duty cycle, so that the current of the motor first decreases rapidly. Then the controller controls, based on a fifth duty cycle, the first switching transistor *Q*₁₂₁ of the second bridge arm and the first switching transistor *Q*₁₃₁ of the third bridge arm to be turned on, where the fifth duty cycle is greater than the first duty cycle, so that the decreasing speed of the current of the motor can be reduced.

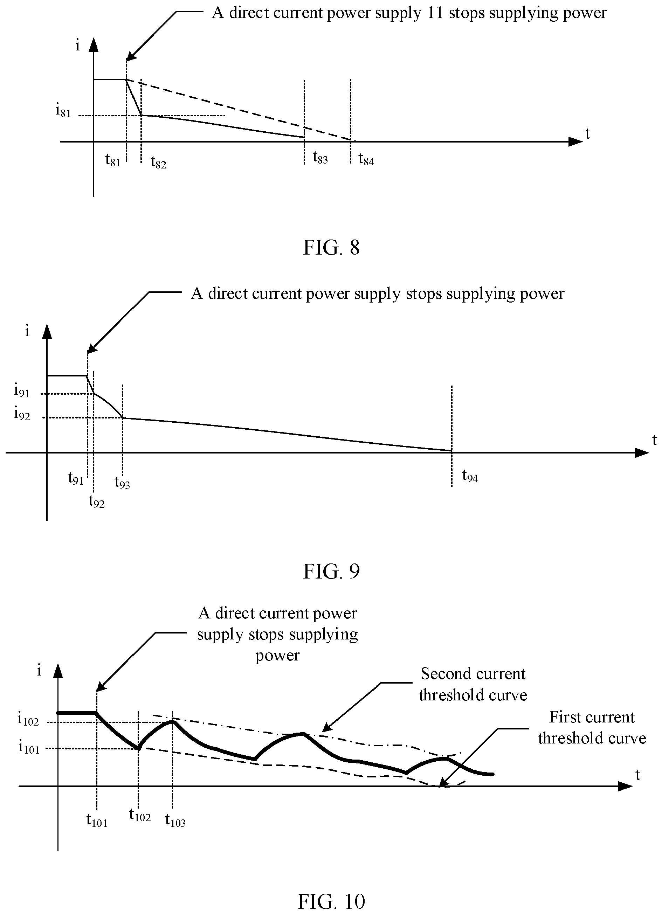

It may be understood that energy on the first capacitor *C*₁₁ continuously decreases, and the controller may reduce the decreasing speed of the current of the motor by increasing the on duration of the first switching transistor *Q*₁₂₁ of the second bridge arm and the first switching transistor *Q*₁₃₁ of the third bridge arm, to reduce a decreasing speed of the torque of the motor. In this case, for the current of the motor, refer to a dashed line part shown in FIG. 8. As shown in FIG. 8, before a time *t*₈₁, the direct current power supply 11 may provide a constant current or a variable current to the motor. FIG. 8 is merely an example for describing the current of the motor before the time *t*₈₁, but this is not limited. At the time *t*₈₁, the direct current power supply 11 stops supplying power. From the time *t*₈₁ to a time *t*₈₄, the power supply circuit 13 forms the third closed loop shown in FIG. 7, and the first capacitor *C*₁₁ provides a third current to the motor. The third current slowly decreases, and the torque of the motor slowly decreases.

Further, in some feasible implementations, when detecting that the direct current power supply stops supplying power, and the current of the motor decreases to a rebound torque current, the controller controls, based on a third duty cycle, the first switching transistor *Q*₁₂₁ of the second bridge arm and the first switching transistor *Q*₁₃₁ of the third bridge arm to be turned on, where the third duty cycle is greater than the first duty cycle or the second duty cycle, and the current of the motor is at least one of a current of the second bridge arm and a current of the third bridge arm. In other words, it may be understood that the current of the motor may be first allowed to decrease to the rebound torque current. The rebound torque current is a current required by the torque for preventing the motor from crackling. As long as the current of the motor is not less than the rebound torque current, the motor does not cause the crackling sound of the mechanical structure. However, when the current of the motor decreases to the rebound torque current, the controller may slow down a current change of the motor by increasing the duty cycle of the first switching transistor *Q*₁₂₁ of the second bridge arm and the first switching transistor *Q*₁₃₁ of the third bridge arm, thereby slowing down a torque change of the motor. This embodiment of this application can be implemented to reduce an energy loss of the first capacitor *C*₁₁. A value of the rebound torque current is a device attribute of the motor, and is related to selection of the motor. In this case, for the current of the motor, refer to a solid line part shown in FIG. 8. As shown in FIG. 8, at a time *t*₈₁, the direct current power supply 11 stops supplying power, and the controller may maintain a value of the first duty cycle from the time *t*₈₁ to a time *t*₈₂ to control the first switching transistor *Q*₁₂₁ of the second bridge arm and the first switching transistor *Q*₁₃₁ of the third bridge arm, or reduce the duty cycle for controlling the first switching transistor *Q*₁₂₁ of the second bridge arm and the first switching transistor *Q*₁₃₁ of the third bridge arm, to form the third closed loop shown in FIG. 7, so that the current of the motor decreases to the rebound torque current *i*₈₁ at the time *t*₈₂. In this case, at the time *t*₈₂, the controller increases the duty cycle for controlling the first switching transistor *Q*₁₂₁ of the second bridge arm and the first switching transistor *Q*₁₃₁ of the third bridge arm, to still form the third closed loop shown in FIG. 7, so that a change slope of the current i of the motor is reduced (that is, a change speed is reduced). Further, a plurality of step current values may be set between the rebound torque current and the constant current provided by the direct current power supply 11 to the motor. In this case, for the current of the motor, refer to FIG. 9. As shown in FIG. 9, a step current value *i*₉₁ is set between the rebound torque current *i*₉₂ and the constant current provided by the direct current power supply 11 to the motor. At a time *t*₉₁, the direct current power supply 11 stops supplying power, and the controller may maintain a value of the first duty cycle from the time *t*₉₁ to a time *t*₉₂ to control the first switching transistor *Q*₁₂₁ of the second bridge arm and the first switching transistor *Q*₁₃₁ of the third bridge arm, or reduce the duty cycle for controlling the first switching transistor *Q*₁₂₁ of the second bridge arm and the first switching transistor *Q*₁₃₁ of the third bridge arm, to form the third closed loop shown in FIG. 7, so that the current of the motor decreases to the step current value *i*₉₁ at the time *t*₉₂. At the time *t*₉₂, the controller may increase the duty cycle for controlling the first switching transistor *Q*₁₂₁ of the second bridge arm and the first switching transistor *Q*₁₃₁ of the third bridge arm, so that a current change speed of the current i of the motor from the time *t*₉₂ to a time *t*₉₃ is less than a current change speed from the time *t*₉₁ to the time *t*₉₂. At the time *t*₉₃, the controller further increases the duty cycle for controlling the first switching transistor *Q*₁₂₁ of the second bridge arm and the first switching transistor *Q*₁₃₁ of the third bridge arm, so that a change speed of the current i of the motor from the time *t*₉₃ to a time *t*₉₄ is lower than the current change speed from the time *t*₉₂ to the time *t*₉₃. Optionally, in some feasible implementations, when it is detected that the direct current power supply 11 stops supplying power, the current of the motor decreases to a first preset current threshold *i*₁₀₁ at a time *t*₁₀₁, and the first switching transistor *Q*₁₂₁ of the second bridge arm and the first switching transistor *Q*₁₃₁ of the third bridge arm are controlled to be turned on, to form the third closed loop shown in FIG. 7. The current i of the motor increases from a time *t*₁₀₂, and the current i of the motor increases to a second preset current threshold *i*₁₀₂ at the time *t*₁₀₂. In this case, the first switching transistor *Q*₁₂₁ of the second bridge arm and the first switching transistor *Q*₁₃₁ of the third bridge arm are controlled to be turned off, where the second preset current threshold *i*₁₀₂ is greater than the first preset current threshold *i*₁₀₁, and the current of the motor is at least one of the current of the second bridge arm and the current of the third bridge arm. Optionally, the first preset current threshold may be any value in a first current threshold curve, and the second preset threshold may be any value in a second current threshold curve. In this case, for the current of the motor, refer to FIG. 10. In FIG. 10, values of the first preset current threshold and the second preset current threshold are changed, and the first switching transistor *Q*₁₂₁ of the second bridge arm and the first switching transistor *Q*₁₃₁ of the third bridge arm are alternately controlled to be turned on or off between the first preset current threshold and the second preset current threshold, to slowly reduce the current of the motor.

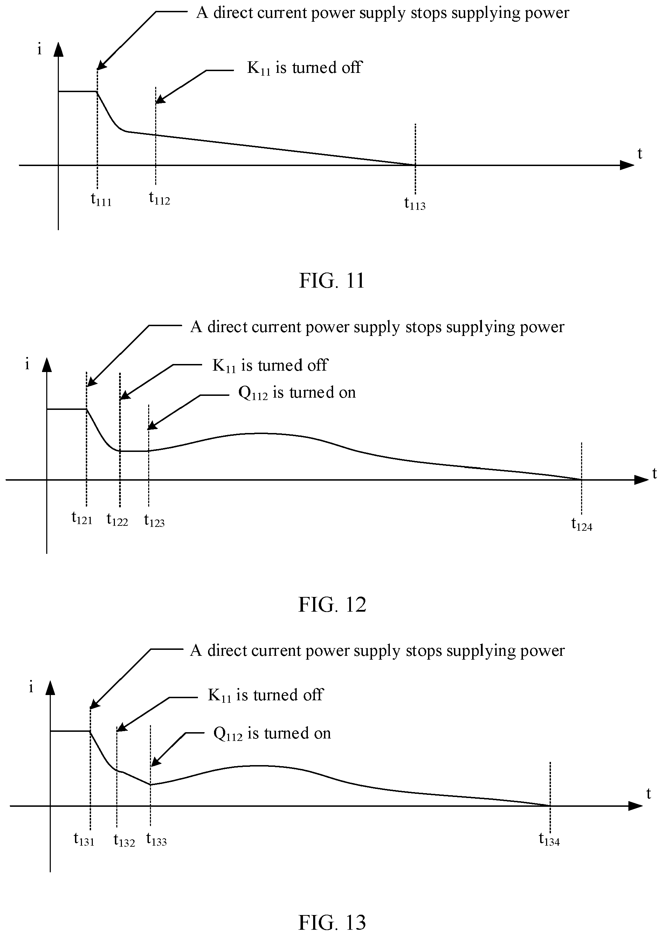

In some feasible implementations, based on the foregoing embodiments described with reference to FIG. 7 to FIG. 10, the controller may further control the first switch *K*₁₁ to be turned off. To be specific, the power supply circuit 13 may first form the third closed loop (that is, the schematic circuit diagram shown in FIG. 7), and then form the second closed loop (that is, the schematic circuit diagram shown in FIG. 4). In a process of forming the third closed loop to the second closed loop by the power supply circuit 13, a current i of the motor is shown in FIG. 11. Before a time *t*₁₁₁, the direct current power supply 11 may provide a constant current or a variable current to the motor. FIG. 11 is merely an example for describing the current of the motor before the time *t*₁₁₁, but this is not limited. At the time *t*₁₁₁, the direct current power supply 11 stops supplying power, and the current i of the motor decreases; and at a time *t*₁₁₂, the first switch *K*₁₁ is controlled to be turned off, and the current i continues to decrease.

Optionally, in some feasible implementations, based on the embodiments described with reference to FIG. 7 to FIG. 10, the controller may further control the first switch *K*₁₁ to be turned off and control the second switching transistor *Q*₁₁₂ of the first bridge arm, the first switching transistor *Q*₁₂₁ of the second bridge arm, and the first switching transistor *Q*₁₃₁ of the third bridge arm to be turned on. To be specific, the power supply circuit 13 may first form the third closed loop (that is, the schematic circuit diagram shown in FIG. 7), and then form the first closed loop (that is, the schematic circuit diagram shown in FIG. 3). In a process of forming the third closed loop to the first closed loop by the power supply circuit 13, a current i of the motor is shown in FIG. 12. Before a time *t*₁₂₁, the direct current power supply 11 may provide a constant current or a variable current to the motor. FIG. 12 is merely an example for describing the current of the motor before the time *t*₁₂₁, but this is not limited. At the time *t*₁₂₁, the direct current power supply 11 stops supplying power, and the current i of the motor decreases. In this case, the current i of the motor is provided by the first capacitor *C*₁₁. At a time *t*₁₂₂, the first switch *K*₁₁ is controlled to be turned off, and the current i continues to decrease. At a time *t*₁₂₃, the second switching transistor *Q*₁₁₂ of the first bridge arm is controlled to be turned on. A difference between the current of the motor in this embodiment of this application and the schematic diagram of the current shown in FIG. 5 lies in that a time interval between the time *t*₁₂₁ and the time *t*₁₂₂ is longer than a time interval between the time *t*₅₁ and the time *t*₅₂, where the time interval between the moment *t*₅₁ and the time *t*₅₂ is caused by a device attribute of the controller, and the time *t*₁₂₁ to the time *t*₁₂₂ are set to allow the first capacitor *C*₁₁ to provide a current to the motor.

Further, in some feasible implementations, on a basis of implementing the embodiments described with reference to FIG. 7 to FIG. 10, the controller may have a delay between controlling the first switch *K*₁₁ to be turned off and controlling the second switching transistor *Q*₁₁₂ of the first bridge arm to be turned on. In this case, each motor winding is short-circuited to freewheel within the delay time, that is, the second closed loop shown in FIG. 4 is formed. Then the second switching transistor *Q*₁₁₂ of the first bridge arm, the first switching transistor *Q*₁₂₁ of the second bridge arm, and the first switching transistor *Q*₁₃₁ of the third bridge arm are controlled to be turned on, that is, the first closed loop shown in FIG. 3 is formed.

In other words, the power supply circuit 13 may first form the third closed loop (that is, the schematic circuit diagram shown in FIG. 7), and then form the second closed loop (that is, the schematic circuit diagram shown in FIG. 4) and the first closed loop (that is, the schematic circuit diagram shown in FIG. 3) sequentially. In a process of forming the third closed loop, and the second closed loop to the first closed loop by the power supply circuit 13, a current i of the motor is shown in FIG. 13. Before a time *t*₁₃₁, the direct current power supply 11 may provide a constant current or a variable current to the motor. FIG. 13 is merely an example for describing the current of the motor before the time *t*₁₃₁, but this is not limited. At the time *t*₁₃₁, the direct current power supply 11 stops supplying power, and the current i of the motor decreases. From the time *t*₁₃₁ to a time *t*₁₃₂, the current i of the motor is provided by the first capacitor *C*₁₁. From the time *t*₁₃₂ to a time *t*₁₃₃, each motor winding performs freewheeling on the motor, and the current of the motor further decreases. After the time *t*₁₃₃, the power supply circuit 13 forms the first closed loop shown in FIG. 3, and the power battery 12 provides a current to the motor. In this case, the current of the motor is in a controlled state. The controller may control the on duration or a turn-on sequence of the second switching transistor *Q*₁₁₂ of the first bridge arm, the first switching transistor *Q*₁₂₁ of the second bridge arm, and the first switching transistor *Q*₁₃₁ of the third bridge arm, so that the current of the motor may first increase and then slowly decrease, until the current decreases to 0 at a time *t*₅₄, as shown in FIG. 13.

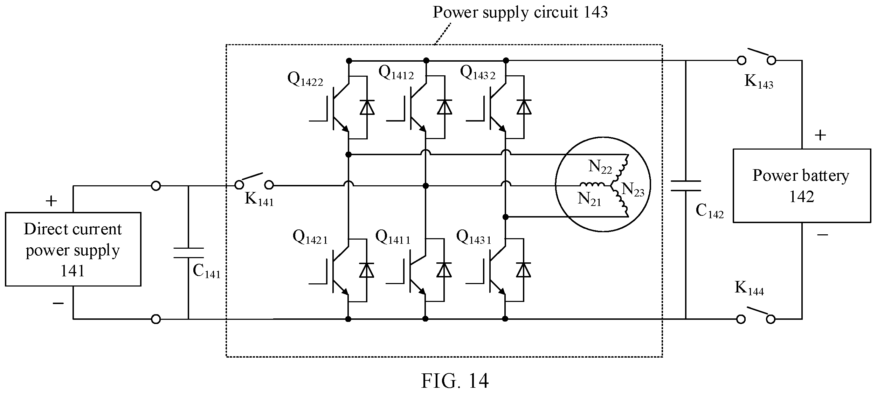

In some feasible implementations, the power supply circuit provided in this embodiment of this application may further have another circuit structure. FIG. 14 is another circuit diagram of a power supply circuit according to an embodiment of this application. As shown in FIG. 14, the power supply circuit 143 is disposed between a direct current power supply 141 and a power battery 142, and the power supply circuit 143 includes a first switch *K*₁₄₁, three bridge arms, and a motor. The motor includes three motor windings (for example, a first motor winding *N*₂₁, a second motor winding *N*₂₂, and a third motor winding *N*₂₃) corresponding to the three bridge arms.

In a specific implementation, a first end of the direct current power supply 141 is coupled to a first switching transistor of each bridge arm and a first end of the power battery 142.

It can be learned from FIG. 14 that, in this embodiment of this application, the first end of the direct current power supply 141 is a negative end instead of a positive end, and the first end of the power battery 142 is a negative end instead of a positive end, different from those in the power supply circuit shown in FIG. 1. In addition, positions of the first switching transistor and a second switching transistor in each bridge arm are interchanged with positions in the power supply circuit shown in FIG. 1.

Optionally, a switch *K*₁₄₃ may be disposed between the direct current power supply 141 and the positive end of the power battery 142.

A second end of the power battery 142 is coupled to a second switching transistor of each bridge arm, where the second end of the power battery 142 is the positive end. For example, each bridge arm includes a first switching transistor and a second switching transistor. For example, a first bridge arm includes a first switching transistor *Q*₁₄₁₁ and a second switching transistor *Q*₁₄₁₂, a second bridge arm includes a first switching transistor *Q*₁₄₂₁ and a second switching transistor *Q*₁₄₂₂, and a third bridge arm includes a first switching transistor *Q*₁₄₃₁ and a second switching transistor *Q*₁₄₃₂. In this case, the positive end of the power battery 142 is coupled to the second switching transistor *Q*₁₄₁₂ of the first bridge arm, the second switching transistor *Q*₁₄₂₂ of the second bridge arm, and the second switching transistor *Q*₁₄₃₂ of the third bridge arm. Optionally, a switch *K*₁₄₄ may be disposed between the negative end of the power battery 142 and the second switching transistor *Q*₁₄₃₂ of the third bridge arm.

Same as in the power supply circuit shown in FIG. 1, a midpoint of each bridge arm is coupled to a motor winding corresponding to the bridge arm. For example, a midpoint of the first bridge arm is coupled to the first motor winding *N*₂₁, a midpoint of the second bridge arm is coupled to the second motor winding *N*₂₂, and a midpoint of the third bridge arm is coupled to the third motor winding *N*₂₃. In addition, the midpoint of the first bridge arm is further coupled to one end of the first switch *K*₁₄₁, and the other end of the first switch *K*₁₄₁ is coupled to a second end of the direct current power supply 141, where the second end of the direct current power supply 141 is a positive end.

In some feasible implementations, the midpoint of the first bridge arm may be further coupled to the positive end (not shown in the figure) of the direct current power supply 141 by using a third switch. For example, the second switching transistor of each bridge arm is further coupled to one end of the third switch, and the other end of the third switch is coupled to the positive end of the direct current power supply 141. In other words, a quantity of switches disposed in the power supply circuit is not limited in this embodiment of this application, and a specific switch may be disposed based on an actual requirement of the power supply circuit.

The first switch *K*₁₄₁ and the third switch (not shown in the figure) may be specifically implemented as contactors, relays, or the like, and may be disposed separately from the power supply circuit 143. For example, the first switch *K*₁₄₁ and the third switch are disposed in a power distribution box of an electric vehicle, and the third switch is disposed near a battery pack. A position for placing the switch is not limited in this embodiment of this application, provided that an electrical connection relationship shown in FIG. 14 can be implemented.

Optionally, the power supply circuit 143 may further include a first capacitor *C*₁₄₁, and the first capacitor *C*₁₄₁ is connected in parallel to two ends of the direct current power supply 141. For example, alternatively, the first capacitor *C*₁₄₁ may be specifically provided by an output end of the direct current power supply 141. For example, the direct current power supply 141 is specifically implemented as a charging pile, and an output end of the charging pile has a capacitor. In this case, the first capacitor *C*₁₄₁ shown in FIG. 14 includes the capacitor at the output end of the charging pile and a capacitor at an input end of the power supply circuit 143.

Optionally, the power supply circuit 143 may further include a second capacitor *C*₁₄₂, and the second capacitor *C*₁₄₂ is connected in parallel to two ends of the power battery 142.

The power supply circuit 143 reuses the motor winding in the motor to boost a voltage output by the direct current power supply 141 and provide the voltage to the power battery 142. An implementation principle thereof is the same as that described above with reference to FIG. 2A and FIG. 2B.

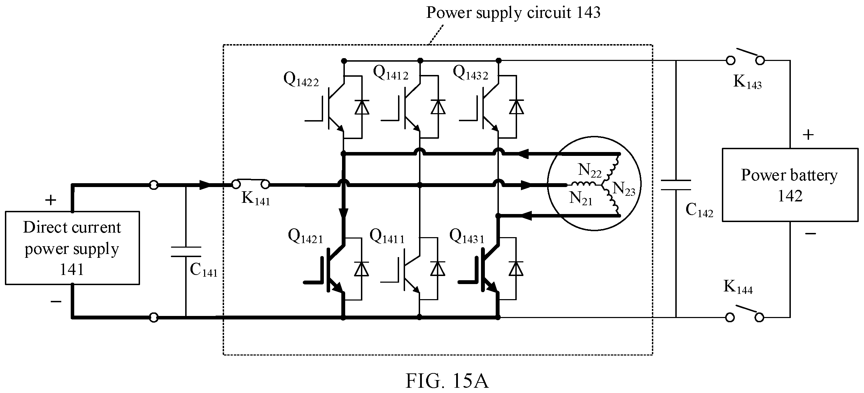

For example, each motor winding is equivalent to an inductor. In a charging state, as shown in FIG. 15A, the first switch *K*₁₁ is closed, and the first switching transistor *Q*₁₄₂₁ of the second bridge arm and the first switching transistor *Q*₁₄₃₁ of the third bridge arm are turned on. In this case, after a current output from the positive end of the direct current power supply 11 passes through the first switch *K*₁₄₁ and the first motor winding *N*₂₁, the current may pass through the second motor winding *N*₂₂ and the first switching transistor *Q*₁₄₂₁ sequentially to return to the negative end of the direct current power supply 11, or may pass through the third motor winding *N*₁₃ and the first switching transistor *Q*₁₄₃₁ sequentially to return to the negative end of the direct current power supply 11.

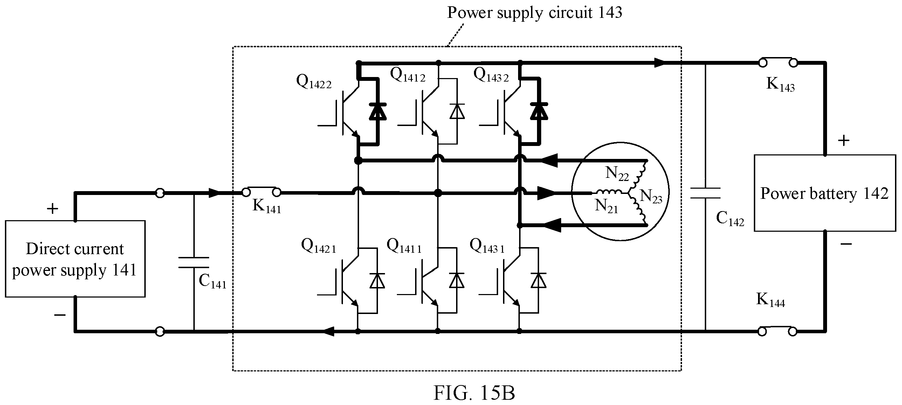

When each motor winding is in a discharging state, as shown in FIG. 15B, the first switching transistor *Q*₁₂₁ of the second bridge arm and the first switching transistor *Q*₁₃₁ of the third bridge arm are turned off, and a current output by the second motor winding *N*₂₂ passes through a freewheeling diode of the second switching transistor *Q*₁₄₂₂ in the second bridge arm, the power battery 142, the direct current power supply 141, the first switch *K*₁₄₁, and the first motor winding *N*₁₄₁ sequentially to form a closed loop, and a current output by the third motor winding *N*₁₃ passes through a freewheeling diode of the second switching transistor *Q*₁₄₃₂ in the third bridge arm, the power battery 142, the direct current power supply 141, the first switch *K*₁₄₁, and the first motor winding *N*₁₄₁ sequentially to form a closed loop.

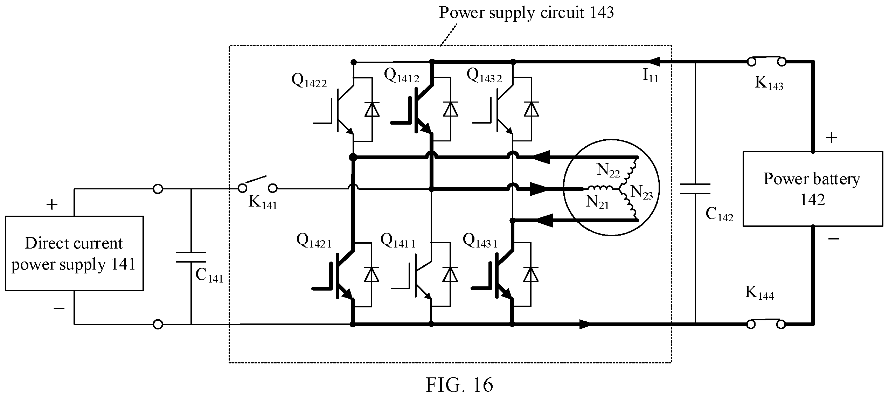

In some feasible implementations, when detecting that the direct current power supply stops supplying power, a controller controls the first switch *K*₁₄₁ to be turned off. After the first switch *K*₁₄₁ is turned off, the controller in this embodiment of this application further continues to control the second switching transistor *Q*₁₄₁₂ of the first bridge arm, the first switching transistor *Q*₁₄₂₁ of the second bridge arm, and the first switching transistor *Q*₁₄₃₁ of the third bridge arm to be turned on. In this case, the power supply circuit 143 forms a first closed loop. For a schematic circuit diagram of the first closed loop, refer to FIG. 16. As shown in FIG. 16, after an output current of the power battery 142 passes through the switch *K*₁₄₃, the second switching transistor *Q*₁₄₁₂ of the second bridge arm, and the first motor winding *N*₂₁, the output current may pass through the second motor winding *N*₂₂ and the first switching transistor *Q*₁₄₂₁ of the first bridge arm to form a closed loop, or may pass through the third motor winding *N*₂₃ and the first switching transistor *Q*₁₄₃₁ of the third bridge arm to form a closed loop. In this case, the power battery 12 provides the first current *I*₁₁ to the motor, and a value of the first current *I*₁₁ may be controlled by the controller.

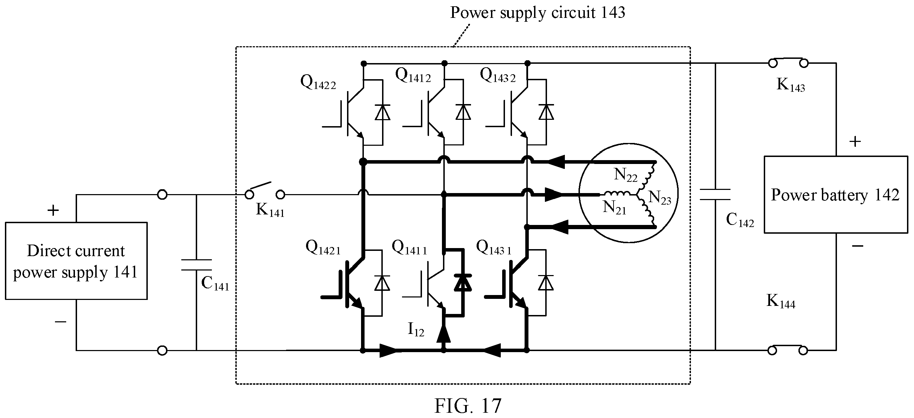

Optionally, in some feasible implementations, when the first switch *K*₁₄₁ is turned off, the first switching transistor *Q*₁₄₂₁ of the second bridge arm and the first switching transistor *Q*₁₄₃₁ of the third bridge arm are in an on state, and the second switching transistor *Q*₁₄₁₂ of the first bridge arm is in an off state. Occurrence of the states may be understood as presence of a delay between controlling the first switch *K*₁₄₁ to be turned off and controlling the second switching transistor *Q*₁₄₁₂ of the first bridge arm to be turned on due to a device attribute of the controller after the controller detects that the direct current power supply 141 stops supplying power and then controls the first switch *K*₁₄₁ to be turned off. Each motor winding is short-circuited to freewheel within the delay time, so that a second closed loop is formed. For a schematic circuit diagram of the second closed loop, refer to FIG. 17. As shown in FIG. 17, because an inductance current cannot change abruptly, an output current of the second motor winding *N*₂₂ passes through the first switching transistor *Q*₁₄₂₁ of the second bridge arm, the first switching transistor *Q*₁₄₁₁ of the first bridge arm (especially, a parasitic diode of the first switching transistor *Q*₁₄₁₁), and the first motor winding *N*₂₁ to form a closed loop, and an output current of the third motor winding *N*₂₃ passes through the first switching transistor *Q*₁₄₃₁ of the third bridge arm, the parasitic diode of the first switching transistor *Q*₁₄₁₁, and the first motor winding *N*₂₁ to form a closed loop. The current passing through the motor is a second current *I*₁₂.

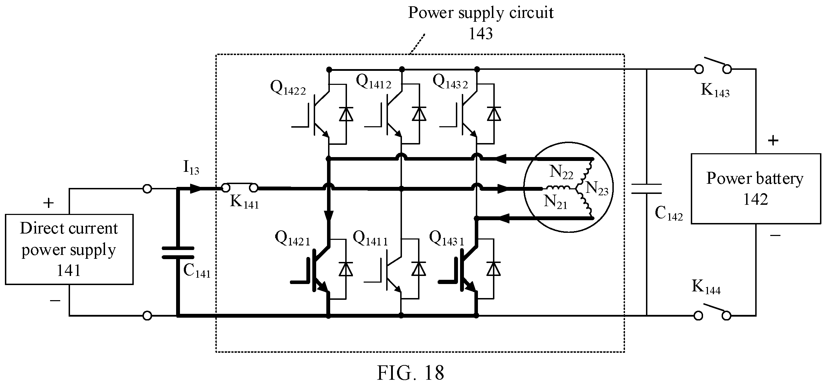

In some feasible implementations, the controller controls the first switching transistor *Q*₁₄₂₁ of the second bridge arm and the first switching transistor *Q*₁₄₃₁ of the third bridge arm to be turned on. In this case, the power supply circuit 143 forms a third closed loop. For a schematic circuit diagram of the third closed loop, refer to FIG. 18. As shown in FIG. 18, after an output current of the first capacitor *C*₁₄₁ passes through the first switch *K*₁₄₁ and the first motor winding *N*₂₁, the output current may pass through the second motor winding *N*₂₂ and the first switching transistor *Q*₁₄₂₁ sequentially to form a closed loop, or may pass through the third motor winding *N*₁₃ and the first switching transistor *Q*₁₄₃₁ sequentially to form a closed loop.

It may be understood that, for schematic current diagrams of the first closed loop, the second closed loop, and the third closed loop provided in this embodiment of this application, reference may be made to the foregoing embodiments described with reference to FIG. 3 to FIG. 13. Details are not described herein again.

In some feasible implementations, an embodiment of this application further provides a control apparatus for the power supply circuit described with reference to FIG. 1 to FIG. 18. The control apparatus includes a controller and a memory. The controller and the memory are connected by using a bus system. The memory stores instructions. The controller invokes the instructions stored in the memory, to perform the control method described with reference to FIG. 1 to FIG. 18. For example, the controller may be specifically implemented as one chip or a plurality of chips having communication connections.

It should be noted that the terms "first" and "second" are merely intended for a purpose of description, and shall not be understood as an indication or implication of relative importance.

A person of ordinary skill in the art may understand that all or a part of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a removable storage device, a read-only memory (ROM, Read-Only Memory), a random access memory (RAM, Random Access Memory), a magnetic disk, or an optical disc.

The foregoing descriptions are merely specific implementations of the present invention and are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A control method for a power supply circuit, wherein the power supply circuit is disposed between a direct current power supply and a power battery, the power supply circuit comprises a first switch, three bridge arms, and a motor, each of the three bridge arms comprises a first switching transistor and a second switching transistor, and the motor comprises three motor windings corresponding to the three bridge arms;
a first end of the direct current power supply is coupled to the first switching transistor of each bridge arm and a first end of the power battery, a second end of the power battery is coupled to the second switching transistor of each bridge arm, a midpoint of any bridge arm among the bridge arms is coupled to a motor winding corresponding to the any bridge arm, and the midpoint of the any bridge arm is a series coupling point between a first switching transistor and a second switching transistor in the any bridge arm; and a midpoint of a first bridge arm among the bridge arms is further coupled to one end of the first switch, and the other end of the first switch is coupled to a second end of the direct current power supply; and
the control method comprises:
when detecting that the direct current power supply stops supplying power, controlling the first switch to be turned off; and
after the first switch is turned off, controlling a second switching transistor of the first bridge arm, a first switching transistor of a second bridge arm among the bridge arms, and a first switching transistor of a third bridge arm among the bridge arms to be turned on, so that the power battery forms a first closed loop through the first switching transistor of the second bridge arm, the first switching transistor of the third bridge arm, and the second switching transistor of the first bridge arm; and providing, by the power battery, a first current to the motor, wherein the first current is used to control a torque of the motor.

2. The control method according to claim 1, wherein when the first switch is turned off, and the first switching transistor of the second bridge arm and the first switching transistor of the third bridge arm are in an on state, and the second switching transistor of the first bridge arm is in an off state, each motor winding is short-circuited to freewheel, so that each motor winding forms a second closed loop through a first switching transistor of the first bridge arm, the first switching transistor of the second bridge arm, and the first switching transistor of the third bridge arm, wherein
a current passing through the motor is a second current, and the second current is used to control the torque of the motor.

3. The control method according to claim 1 or 2, wherein the power supply circuit further comprises a first capacitor, and the first capacitor and the direct current power supply are connected in parallel; and
before the controlling the first switch to be turned off, the control method further comprises:
controlling, based on a first duty cycle, the first switching transistor of the second bridge arm among the bridge arms and the first switching transistor of the third bridge arm among the bridge arms to be turned on; and
when detecting that the direct current power supply stops supplying power, controlling, based on a second duty cycle, the first switching transistor of the second bridge arm and the first switching transistor of the third bridge arm to be turned on, wherein the second duty cycle is greater than the first duty cycle; and providing, by the first capacitor, a third current to the motor, wherein the third current is used to control the torque of the motor.

4. The control method according to claim 3, wherein the controlling, based on a second duty cycle, the first switching transistor of the second bridge arm and the first switching transistor of the third bridge arm to be turned on when detecting that the direct current power supply stops supplying power specifically comprises:
when detecting that the direct current power supply stops supplying power, and a current of the motor decreases to a rebound torque current, controlling, based on a third duty cycle, the first switching transistor of the second bridge arm and the first switching transistor of the third bridge arm to be turned on, wherein the third duty cycle is greater than the first duty cycle or the second duty cycle, and the current of the motor is at least one of a current of the second bridge arm and a current of the third bridge arm.

5. The control method according to claim 1 or 2, wherein the power supply circuit further comprises a first capacitor, and the first capacitor and the direct current power supply are connected in parallel; and
before the controlling the first switch to be turned off, the control method further comprises:
when a current of the motor decreases to a first preset current threshold, controlling the first switching transistor of the second bridge arm among the bridge arms and the first switching transistor of the third bridge arm among the bridge arms to be turned on; and
when the current of the motor increases to a second preset current threshold, controlling the first switching transistor of the second bridge arm among the bridge arms and the first switching transistor of the third bridge arm among the bridge arms to be turned off, wherein the second preset current threshold is greater than the first preset current threshold, and the current of the motor is at least one of a current of the second bridge arm and a current of the third bridge arm.

6. The control method according to claim 5, wherein the first preset current threshold is any value in a first current threshold curve, and the second preset threshold is any value in a second current threshold curve.

7. The control method according to any one of claims 1 to 6, wherein that the direct current power supply stops supplying power is that an electrical parameter output by the direct current power supply decreases to a first reference electrical parameter threshold within preset duration, wherein the electrical parameter comprises at least one of a current and a voltage.

8. The control method according to any one of claims 1 to 6, wherein that the direct current power supply stops supplying power is that a difference between an electrical parameter output by the direct current power supply and a reference electrical parameter is greater than a second reference electrical parameter threshold, wherein the electrical parameter comprises at least one of a current and a voltage.

9. The control method according to any one of claims 1 to 8, wherein the power supply circuit further comprises a second switch;
that a first end of the direct current power supply is coupled to the first switching transistor of each bridge arm and a first end of the power battery specifically comprises:
the first end of the direct current power supply is coupled to one end of the second switch, and the other end of the second switch is coupled to the first switching transistor of each bridge arm and the first end of the power battery; and
the controlling the first switch to be turned off specifically comprises:
controlling at least one of the first switch and the second switch to be turned off.

10. A control apparatus for a power supply circuit, wherein the control apparatus comprises a controller and a memory, and the controller and the memory are connected by using a bus system;
the memory is configured to store instructions; and
the controller is configured to invoke the instructions stored in the memory, to perform the control method according to any one of claims 1 to 9.

11. An electric vehicle, wherein the electric vehicle comprises the control apparatus according to claim 10 and a power battery, and the control apparatus is configured to control charging or discharging of the power battery.
